# EUROPÄISCHE PATENTSCHRIFT

(11) **EP 3 825 792 B1**
(45) Veröffentlichungstag und Bekanntmachung des Hinweises auf die Patenterteilung: **04.09.2024**
(21) Anmeldenummer: 19210772.0
(22) Anmeldetag: 21.11.2019
(51) Int. Cl.: G05B 19/042, G05B 15/02

(54) **VERFAHREN ZUR STEUERUNG WENIGSTENS EINES AKTUATORS EINES SMART-HOME-SYSTEMS UND/ODER ZUR GENERIERUNG UND/ODER ÜBERTRAGUNG WENIGSTENS EINER STEUERUNGSNACHRICHT ZU DEM WENIGSTENS EINEN AKTUATOR DES SMART-HOME-SYSTEMS UNTER VERWENDUNG EINER BEDIENVORRICHTUNG, SYSTEM, VERWENDUNG EINER BEDIENVORRICHTUNG, EINER SENSOREINRICHTUNG ODER EINER STEUERUNGSEINRICHTUNG, COMPUTERPROGRAMM UND COMPUTERLESBARES MEDIUM**
METHOD FOR CONTROLLING AT LEAST ONE ACTUATOR OF A SMART HOME SYSTEM AND / OR FOR GENERATING AND / OR TRANSMITTING AT LEAST ONE CONTROL MESSAGE TO AT LEAST ONE ACTUATOR OF THE SMART HOME SYSTEM USING AN OPERATING DEVICE, SYSTEM, USE OF AN OPERATING DEVICE, A SENSOR DEVICE OR A CONTROL DEVICE, COMPUTER PROGRAM AND COMPUTER-READABLE MEDIUM
PROCÉDÉ DE COMMANDE D'AU MOINS UN ACTIONNEUR D'UN SYSTÈME DOMOTIQUE ET/OU DE GÉNÉRATION ET/OU DE TRANSMISSION D'AU MOINS UN MESSAGE DE COMMANDE À AU MOINS UN ACTIONNEUR DU SYSTÈME DOMOTIQUE À L'AIDE D'UN DISPOSITIF D'ACTIONNEMENT, SYSTÈME, UTILISATION D'UN DISPOSITIF D'ACTIONNEMENT, D'UN AGENCEMENT DE CAPTEUR OU D'UN AGENCEMENT DE COMMANDE, PROGRAMME INFORMATIQUE ET SUPPORT LISIBLE PAR ORDINATEUR

(43) Veröffentlichungstag der Anmeldung: 26.05.2021
(73) Patentinhaber: Deutsche Telekom AG, 53113 Bonn (DE)
(72) Erfinder: KOHN, Stefan, 53173 Bonn (DE); SCHÄFERS, Till, 53225 Bonn (DE); SCHROD, Dirk, 60316 Frankfurt (DE); WIDMANN, Florian, 70176 Stuttgart (DE); HESSENBRUCH, Dirk, 40764 Langenfeld (DE)
(74) Vertreter: Schwöbel, Thilo K.

(56) Entgegenhaltungen:
- US-A1- 2018 059 901
- US-A1- 2019 109 937

## Beschreibung

### Stand der Technik

Die Erfindung betrifft ein Verfahren zur Steuerung wenigstens eines Aktuators eines Smart-Home-Systems und/oder zur Generierung und/oder Übertragung wenigstens einer Steuerungsnachricht zu dem wenigstens einen Aktuator des Smart-Home-Systems unter Verwendung einer Bedienvorrichtung, wobei der Aktuator Teil einer Mehrzahl von Aktuatoren ist, die in einem lokal begrenzten geographischen Bereich des Smart-Home-Systems angeordnet oder vorhanden sind und die in dem lokal begrenzten geographischen Bereich direkt oder indirekt miteinander verbunden sind.

Die Erfindung betrifft des Weiteren ein System zur Steuerung wenigstens eines Aktuators eines Smart-Home-Systems und/oder zur Generierung und/oder Übertragung wenigstens einer Steuerungsnachricht zu dem wenigstens einen Aktuator des Smart-Home-Systems unter Verwendung einer Bedienvorrichtung, wobei der Aktuator Teil einer Mehrzahl von Aktuatoren ist, die in einem lokal begrenzten geographischen Bereich des Smart-Home-Systems angeordnet oder vorhanden sind und die in dem lokal begrenzten geographischen Bereich direkt oder indirekt miteinander verbunden sind.

Die Erfindung betrifft ferner eine Bedienvorrichtung, eine Sensoreinrichtung bzw. eine Steuerungseinrichtung zur Verwendung in einem erfindungsgemäßen System oder in einem erfindungsgemäßen Verfahren.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt, mit deren Hilfe die Schritte des erfindungsgemäßen Verfahrens durchführbar sind.

Für die Steuerung von Geräten insbesondere im Smart-Home-Kontext bzw. als Teil eines Smart-Home-Systems gibt es bekanntermaßen verschiedene Konzepte zur Bedienung, wobei unterschiedliche Schnittstellen bzw. Interfaces zur Steuerung bzw. zur Bedienung genutzt werden.
Beispielsweise ist die Verwendung eines dezidierten zusätzlichen Geräts (bzw. einer dezidierten peripheren Hardware) - etwa in Form einer Fernbedienung - zur Steuerung eines anderen (zu steuernden) Geräts bekannt, wobei ein zu steuerndes Gerät, etwa ein Fernsehgerät, durch die Betätigung von Bedienelementen eines dezidierten peripheren Geräts gesteuert wird. Der Nachteil eines solchen Bedien- bzw. Steuerungskonzepts ist, dass in der Regel pro zu steuerndem Gerät eine dezidierte periphere Hardware (bzw. ein zusätzliches Gerät) benötigt wird. Zwar sind programmierbare Fernbedienungen (zur Steuerung einer Mehrzahl von zu steuernden Geräten) bekannt; jedoch ist bei diesen regelmäßig die Anzahl der zu steuernden Geräte begrenzt und ferner ist in der Regel die Belegung bzw. die Beziehung zwischen einem Eingabeelement einerseits (etwa eine Taste oder ein Betätigungsknopf) und der ausgelösten Aktion bzw. des zu steuernden Vorgangs statisch.
Darüber hinaus ist auch die Verwendung von Sprache zur Steuerung von Geräten bekannt, etwa unter Nutzung eines Sprachassistenten (bzw. eines sprachgesteuerten, internetbasierten intelligenten persönlichen Assistenten) und eines intelligenten oder vernetzten Lautsprechers (oder Smart-Speakers) mit Mikrofon. Hierfür muss jedoch in der Regel ein Signalwort (sogenanntes "Hot-Word", wie beispielsweise "Siri", "Alexa", "Ok, Google") bekannt sein und es besteht die Möglichkeit zu Fehlbedienungen, falls nicht bestimmte Regeln, wie etwa eine gewisse Syntax bzw. Schlüsselworte, eingehalten werden. Ferner ist es hierbei auch nachteilig, dass eine Spracheingabe zwingend erforderlich ist, d.h. Steuerungen solcher Art sind nicht geeignet für laute Umgebungen oder auch wenn kein Lärm gemacht werden soll. Ferner ist auch hier eine dezidierte Hardware, d.h. ein Gerät in Form des vernetzten Lautsprechers, erforderlich und in der Regel ist die Belegung zwischen einem Sprachbefehl einerseits und der dadurch ausgelösten Aktion andererseits ebenfalls statisch.
Als weiteres Bedien- bzw. Steuerungskonzepts ist ferner auch eine Gestensteuerung (beispielsweise "Kinect") bekannt, bei der mittels einer optischen und/oder im infraroten Spektralbereich einsetzbaren Kameraeinrichtung (ggf. zusammen mit einer Lasereinrichtung) oder einer sonstigen Sensoreinrichtung eine körperliche Bewegung als Benutzereingabe detektierbar ist. Nachteilig hieran ist, dass solche Gesten oder Bewegungen als Benutzereingabe bekannt sein müssen; ferner sind diese nicht immer intuitiv und wiederum ist die Belegung bzw. die Beziehung zwischen Geste und ausgelöster oder intendierter Aktion statisch. Ferner ist auch eine dezidierte Hardware mit in der Regel einer Kameraeinrichtung und einer Lasereinrichtung notwendig.

Neben solchen unterschiedlichen Bedienkonzepten sind herkömmliche Heimgerätesteuerungen bzw. Einrichtungen zur Steuerung von Smart-Home-Systemen in der Regel derart vorgesehen, dass entweder eine (rein) lokale Steuerung in dem (zu steuernden) Gerät erfolgt oder aber eine zentrale Steuerung der angeschlossenen (zu steuernden) Geräte über eine Netzwerkinstanz erfolgt, die sich entweder in der Cloud befindet und/oder in einem zentralen Router (bzw. einer zentralen Einrichtung) vor Ort. Diese beiden Lösungen sind jedenfalls mit den folgenden Nachteilen verbunden: Während die Hardware vor Ort (oder auch die lokale Steuerung in dem jeweiligen Gerät) entsprechende Investitionen erfordert und darüber hinaus in der Regel nicht redundant und damit ausfallgesichert ausgeführt ist, hat eine Cloud-Architektur den Nachteil einer in der Regel größeren Latenz.

Aus der US 2018/059901 A1 ist hierzu ein Verfahren bekannt, bei dem die Position eines Handsteuergeräts durch Sensoren erfasst wird, wobei durch Bewegungen des Handsteuergeräts ein virtueller Strahl durch den Raum bewegt wird und ein vom virtuellen Strahl getroffenes Objekt mit dem Handsteuergerät ausgewählt und gesteuert werden kann. Ferner ist aus der US 2019/109937 A1 eine Software-Anwendung zur Point-and-Click-Bedienung eines Fernsehers bekannt.

### Offenbarung der Erfindung

Der Erfindung liegt die Aufgabe zugrunde, ein optimiertes Verfahren - sowie ein System - zur Steuerung wenigstens eines Aktuators eines Smart-Home-Systems und/oder zur Generierung und/oder Übertragung wenigstens einer Steuerungsnachricht zu dem wenigstens einen Aktuator des Smart-Home-Systems unter Verwendung einer Bedienvorrichtung zur Verfügung zu stellen, so dass mittels einer effizienten System-Architektur bzw. einer effizienten Infrastruktur-Architektur eine intuitiv erfassbare sowie insbesondere kontext- und zustandsabhängige Steuerung von Aktuatoren bzw. Geräte-Funktionalitäten eines Smart-Home-Systems möglich ist.

Die Aufgabe wird erfindungsgemäß gelöst durch ein Verfahren gemäß Anspruch 1.

Es ist dadurch gemäß der vorliegenden Erfindung in vorteilhafter Weise möglich, dass die Steuerung des Aktuators des Smart-Home-Systems (bzw. die Generierung und/oder Übertragung der wenigstens einen Steuerungsnachricht zu dem wenigstens einen Aktuator des Smart-Home-Systems) unter Verwendung der Bedienvorrichtung derart bewerkstelligt wird, dass zum einen eine einfachere, leichtere und intuitivere Benutzung der Aktuatoren bzw. zu steuernden Geräte möglich ist und zum anderen, insbesondere aufgrund der Nutzung der Steuerungseinrichtung als Edge-Servereinrichtung, eine vorteilhaftere und effizientere Kombination der Ziele
-- eines geringeren Aufwandes vor Ort,
-- eines höheren Maßes an Ausfallsicherheit sowie
-- der Erzielung eines besseren Ergebnisses hinsichtlich der Latenz
für die Realisierung dieser Steuerung erzielt werden kann. Die Steuerungseinrichtung ist als Edge-Servereinrichtung erfindungsgemäß entweder in dem lokal begrenzten geographischen Bereich angeordnet oder sie ist dem lokal begrenzten geographischen Bereich als eine außerhalb dessen befindliche Steuerungseinrichtung zugeordnet.

Erfindungsgemäß ist es vorgesehen, dass der Aktuator Teil einer Mehrzahl von Aktuatoren ist, die in einem lokal begrenzten geographischen Bereich des Smart-Home-Systems angeordnet oder vorhanden sind und die in dem lokal begrenzten geographischen Bereich direkt oder indirekt miteinander verbunden sind und dass ferner in dem lokal begrenzten geographischen Bereich wenigstens eine Sensoreinrichtung vorhanden ist, mittels der die Bedienvorrichtung innerhalb des lokal begrenzten geographischen Bereichs ortbar ist. Insbesondere ist es erfindungsgemäß ebenfalls vorgesehen, dass auch die Sensoreinrichtung bzw. die Mehrzahl an Sensoreinrichtungen in dem lokal begrenzten geographischen Bereich direkt oder indirekt miteinander verbunden sind.

Erfindungsgemäß wird eine Steuerung des wenigstens einen Aktuators (bzw. zu steuernden Geräts) vorgenommen bzw. es wird wenigstens eine Steuernachricht generiert und/oder zu dem wenigstens einen Aktuator (bzw. zu steuernden Gerät) übertragen. Hierbei ist erfindungsgemäß vorgesehen, dass in einem ersten Schritt eine Ortung der Bedienvorrichtung innerhalb des lokal begrenzten geographischen Bereichs vorgenommen wird, in einem zweiten Schritt eine Benutzerinteraktion in Bezug auf die Bedienvorrichtung detektiert wird und in einem dritten Schritt der wenigstens eine Aktuator (bzw. das zu steuernde Gerät) in Abhängigkeit der Ortung der Bedienvorrichtung innerhalb des lokal begrenzten geographischen Bereichs und in Abhängigkeit der detektierten Benutzerinteraktion in Bezug auf die Bedienvorrichtung gesteuert wird oder eine Steuerungsnachricht generiert und/oder zu dem wenigstens einen Aktuator übertragen wird. Erfindungsgemäß wird der dritte Schritt insbesondere nach dem ersten und/oder dem zweiten Schritt durchgeführt, wobei die Reihenfolge der Durchführung des ersten und zweiten Schritts in der Regel unerheblich ist bzw. diese Schritte auch zumindest teilweise zeitlich überlappend erfolgen können.

Gemäß der vorliegenden Erfindung ist es vorgesehen, dass zur Ortung der Bedienvorrichtung innerhalb des lokal begrenzten geographischen Bereichs eine Ortsinformation generiert wird oder vorhanden ist und/oder
dass die Ortung der Bedienvorrichtung innerhalb des lokal begrenzten geographischen Bereichs wenigstens derart vorgenommen wird, dass detektiert wird, ob die Bedienvorrichtung in einem ersten Teilbereich des lokal begrenzten geographischen Bereichs - insbesondere in einem ersten Zimmer oder Raum - oder in einem zweiten Teilbereich des lokal begrenzten geographischen Bereichs - insbesondere in einem zweiten Zimmer oder Raum - angeordnet ist, wobei der erste und zweite Teilbereich des lokal begrenzten geographischen Bereichs disjunkt sind.

Dadurch ist es gemäß der Erfindung sowohl möglich, dass entweder eine vergleichsweise präzise Ortung der Bedienvorrichtung innerhalb des lokal begrenzten geographischen Bereichs derart erfolgt, dass der Ort der Bedienvorrichtung mit einer größeren Genauigkeit angebbar ist als lediglich die Aussage, ob die Bedienvorrichtung im ersten oder im zweiten Teilbereich lokalisiert ist. Ferner ist es erfindungsgemäß gemäß einer solchen Ausführungsform jedoch auch möglich, dass die Ortung der Bedienvorrichtung innerhalb des lokal begrenzten geographischen Bereichs lediglich mit einer Genauigkeit derart erfolgt, die eine Aussage erlaubt, ob die Bedienvorrichtung entweder im ersten oder aber im zweiten Teilbereich lokalisiert ist. In beiden Fällen ist es erfindungsgemäß möglich und vorgesehen, dass eine Ortsinformation (bezüglich der Ortung der Bedienvorrichtung) generiert wird oder vorhanden ist.

Gemäß einer Ausführungsform der vorliegenden Erfindung ist es vorgesehen, dass der lokal begrenzte geographische Bereich einer Wohnung oder einem Gebäude oder Haus oder einem Grundstück oder einer Mehrzahl von Grundstücken entspricht, insbesondere das Grundstück oder die Mehrzahl von Grundstücken umfassend eine Mehrzahl von Wohnungen oder Häusern oder Gebäuden, wobei der lokal begrenzte geographische Bereich jedoch insbesondere kleiner als ein Land oder eine Stadt oder ein Stadtteil ist.

Dadurch ist es gemäß einer solchen Ausführungsform der Erfindung vorteilhaft möglich, dass das erfindungsgemäße Verfahren und das erfindungsgemäße System im Bereich eines Smart-Home-Systems verwendet wird.

Gemäß einer weiteren Ausführungsform der vorliegenden Erfindung ist es ferner auch vorgesehen, dass zur Detektion der Benutzerinteraktion in Bezug auf die Bedienvorrichtung eines oder mehrere der folgenden Verfahren verwendet wird, wobei insbesondere eine Interaktionsinformation generiert wird:
-- durch Detektion einer rotativen und/oder translativen Lageänderung der Bedienvorrichtung, insbesondere mittels eines Orientierungs- oder Lagedetektors als Teil der Bedienvorrichtung - insbesondere umfassend wenigstens einen Inertialsensor, insbesondere wenigstens einen Beschleunigungssensor und/oder wenigstens einen Drehratensensor - oder mittels eines außerhalb der Bedienvorrichtung angeordneten, insbesondere als Teil der wenigstens einen Sensoreinrichtung realisierten, Orientierungs- oder Lagedetektors,
-- durch Detektion eines optischen Signals oder eines Bildsignals oder eines Videosignals durch die Bedienvorrichtung oder durch einen außerhalb der Bedienvorrichtung angeordneten optischen Sensor oder Videosensor, insbesondere mittels einer Kameraeinrichtung der Bedienvorrichtung oder einer außerhalb der Bedienvorrichtung angeordneten Kameraeinrichtung,
-- durch Detektion eines akustischen Signals durch die Bedienvorrichtung oder durch einen akustischen Sensor außerhalb der Bedienvorrichtung.

Dadurch ist es gemäß einer solchen Ausführungsform der Erfindung in vorteilhafter Weise möglich, dass als Bedienvorrichtung eine Vielzahl von unterschiedlichen Vorrichtungen in Frage kommen und eine Vielzahl von unterschiedlichen Verfahren Verwendung finden können.
Beispielsweise ist es erfindungsgemäß möglich, dass eine tragbare Bedienvorrichtung Verwendung findet, etwa in der Größe eines etwa handtellergroßen Quaders oder in einer anderen Formgebung wie beispielsweise als relativ flacher (gestauchter) Zylinder, oder als relativ hoher (gestreckter) Zylinder, oder als im Wesentlichen quaderförmige Vorrichtung, jedoch mit Abrundungen, oder als ellipsoidförmige Vorrichtung.
Alternativ oder kumulativ hierzu ist es erfindungsgemäß möglich, dass die Bedienvorrichtung in der Lage ist ein optisches Signal oder ein Bildsignal oder ein Videosignal, insbesondere mittels einer Kameraeinrichtung, zu erfassen und dadurch zur Gestenerkennung befähigt ist.
Ferner ist es alternativ oder kumulativ erfindungsgemäß möglich, dass die Bedienvorrichtung in der Lage ist ein akustisches Signal zu erfassen und dadurch zur Spracherkennung befähigt ist.
Insbesondere ist es erfindungsgemäß mittels einer solchen Ausführungsform ebenfalls möglich, dass als Bedienvorrichtung ein Gegenstand verwendet wird, welcher selbst gar keine Sensoreinrichtung (oder Sensoreinrichtungen) zur Detektion seiner Orientierung und/oder Lage aufweist, sondern dessen Orientierung und/oder Lage durch außerhalb der Bedienvorrichtung befindliche Sensoren, insbesondere die wenigstens eine Sensoreinrichtung oder aber die Mehrzahl von Sensoreinrichtungen, erfasst bzw. detektiert wird, etwa mittels eines außerhalb der Bedienvorrichtung angeordneten Orientierungs- oder Lagedetektors und/oder mittels eines außerhalb der Bedienvorrichtung angeordneten optischen Sensors oder Videosensors und/oder mittels einen außerhalb der Bedienvorrichtung angeordneten akustischen Sensor. Erfindungsgemäß ist es somit vorgesehen, dass die Detektion der Bewegung der Bedienvorrichtung bzw. die optische und die akustische Erkennung nicht zwingend in der Bedienvorrichtung erfolgen muss, sondern auch durch Sensoren außerhalb der Bedienvorrichtung erfolgen kann, also z.B. Kameras zur Lageerkennung, oder ein Mikrofon das als Sensor Geräusche der Bedienvorrichtung oder des Nutzers erkennt. Somit kann das Bedienobjekt bzw. die Bedienvorrichtung im Idealfall ein beliebiger Alltagsgegenstand sein, der zu einer Bedienvorrichtung gemacht wird.

Gemäß einer weiteren Ausführungsform der vorliegenden Erfindung ist es vorgesehen, dass zur Ortung der Bedienvorrichtung innerhalb des lokal begrenzten geographischen Bereichs die Bedienvorrichtung die wenigstens eine Sensoreinrichtung umfasst,
wobei die Sensoreinrichtung insbesondere in Form eines Positions- oder Lagedetektors ausgebildet ist, der einen Inertialsensor oder eine Mehrzahl von Inertialsensoren und/oder einen Drucksensor und/oder einen Magnetfeldsensor oder Kompass aufweist.

Hierdurch ist es gemäß der vorliegenden Erfindung insbesondere vorteilhaft möglich, dass die Bedienvorrichtung (mit integrierter Sensoreinrichtung) auch selbst (und insbesondere zumindest teilweise und/oder zeitweise ohne Interaktion mit einer weiteren Sensoreinrichtung außerhalb der Bedienvorrichtung) befähigt ist, die Ortung der Bedienvorrichtung innerhalb des lokal begrenzten geographischen Bereichs vorzunehmen. Beispielsweise ist es erfindungsgemäß vorteilhaft möglich, mittels eines (vergleichsweise präzise messenden bzw. genauen) Beschleunigungssensors (in verschiedene Raumrichtungen), ggf. kombiniert mit einem Drehratensensor (ebenfalls für verschiedene Raumrichtungen bzw. Drehrichtungen) und/oder einem Drucksensor und/oder einem Magnetfeldsensor die Ortung der Bedienvorrichtung vorzunehmen bzw. eine ausreichend genaue Ortinformation zu bestimmen.

Gemäß einer Ausführungsform der vorliegenden Erfindung ist es vorgesehen, dass zur Ortung der Bedienvorrichtung innerhalb des lokal begrenzten geographischen Bereichs die Bedienvorrichtung mit der Sensoreinrichtung oder mit einer Mehrzahl von Sensoreinrichtungen in Wechselwirkung tritt, insbesondere durch Empfang und/oder Aussendung von elektromagnetischen Signalen und/oder durch die Auswertung, insbesondere der Stärke oder Feldstärke, von empfangenen elektromagnetischen Signalen.

Hierdurch ist es gemäß einer solchen Ausführungsform der Erfindung in vorteilhafter Weise möglich, dass eine Anordnung der Bedienvorrichtung mit einer Sensoreinrichtung oder aber eine Anordnung der Bedienvorrichtung mit einer Mehrzahl von Sensoreinrichtungen geeignet ist, die Ortung der Bedienvorrichtung innerhalb des lokal begrenzten geographischen Bereichs vorzunehmen.

Gemäß einer weiteren Ausführungsform der vorliegenden Erfindung ist es vorgesehen, dass die Ortung der Bedienvorrichtung innerhalb des lokal begrenzten geographischen Bereichs mittels eines oder mehrerer der folgenden Verfahren erfolgt:
-- mittels Triangulation unter Verwendung einer Kurzreichweiten-Funktechnologie zwischen der Mehrzahl von Sensoreinrichtungen einerseits und der Bedienvorrichtung andererseits, wobei als Kurzreichweiten-Funktechnologie insbesondere Bluetooth und/oder Zigbee und/oder eine NFC-Funktechnologie (Near Field Communication) und/oder eine D2D-Funktechnologie (Device-to-Device) verwendet wird,
-- unter Nutzung eines globalen Satellitennavigationssystems und/oder unter Nutzung eines satellitenbasierten Ergänzungssystems und/oder unter Nutzung eines differentiellen globalen Positionierungssystems unterstützten globalen Satellitenpositionierungssystems, wobei insbesondere die Positionierung der Bedienvorrichtung durch die Bedienvorrichtung selbst oder durch die Sensoreinrichtung der Bedienvorrichtung erfolgt.

Hierdurch ist es gemäß einer solchen Ausführungsform der Erfindung in vorteilhafter Weise möglich, dass die Ortung der Bedienvorrichtung mittels verschiedener Verfahren bzw. Methoden möglich ist.

Gemäß der vorliegenden Erfindung ist es vorgesehen, dass die Bedienvorrichtung - neben dem wenigstens einen Aktuator - auch zur Steuerung wenigstens eines weiteren Aktuators verwendet wird oder verwendbar ist, wobei der wenigstens eine Aktuator dem ersten Teilbereich des lokal begrenzten geographischen Bereichs zugeordnet ist oder in diesem angeordnet ist und wobei der wenigstens eine weitere Aktuator dem zweiten Teilbereich des lokal begrenzten geographischen Bereichs zugeordnet ist oder in diesem angeordnet ist, wobei
-- in Abhängigkeit der Ortung der Bedienvorrichtung innerhalb des lokal begrenzten geographischen Bereichs, insbesondere in Abhängigkeit der Ortsinformation oder der Detektion, ob die Bedienvorrichtung im ersten Teilbereich des lokal begrenzten geographischen Bereichs oder im zweiten Teilbereich des lokal begrenzten geographischen Bereichs angeordnet ist,
-- entweder der wenigstens eine Aktuator oder der wenigstens eine weitere Aktuator in Abhängigkeit der detektierten Benutzerinteraktion in Bezug auf die Bedienvorrichtung gesteuert wird oder eine Steuerungsnachricht generiert und/oder zu entweder dem wenigstens einen Aktuator oder dem wenigstens einen weiteren Aktuator übertragen wird.

Hierdurch wird erfindungsgemäß der besondere Vorteil erzielt, dass die Bedienvorrichtung bzw. das erfindungsgemäße System umfassend die Bedienvorrichtung, die wenigstens eine Sensoreinrichtung sowie die Steuerungseinrichtung und eine Mehrzahl von Aktuatoren (bzw. zu steuernden Geräten) in der Lage ist, nicht nur mit einem Gerät oder einem Aktuator bzw. einem Typ von Aktuator, sondern flexibel mit einer Mehrzahl von Aktuatoren, insbesondere von unterschiedlichem Typ, in einer Weise zu interagieren, die für einen Benutzer in besonderer Weise intuitiv ist, sowie flexibel an die jeweilige Situation oder den jeweiligen Kontext adaptiv angepasst ist.
Insbesondere ist es hierdurch erfindungsgemäß möglich, dass eine Benutzeroperation der Bedienvorrichtung - etwa eine bestimmte Drehung (etwa nach vorne oder zur Seite oder nach hinten) - an einem ersten Ort (oder ersten Teilbereich) innerhalb des lokal begrenzten geographischen Bereichs zu einer ersten Aktion oder Steuerung eines ersten Geräts oder Aktuators (bzw. des wenigstens einen Aktuators) führt, während die gleiche Benutzeroperation der Bedienvorrichtung an einem zweiten Ort (oder zweiten Teilbereich) innerhalb des lokal begrenzten geographischen Bereichs zu einer zweiten Aktion oder Steuerung eines zweiten Geräts oder Aktuators (bzw. des wenigstens einen weiteren Aktuators) führt.

Gemäß einer weiteren Ausführungsform der vorliegenden Erfindung ist es ferner auch vorgesehen, dass
-- die Steuerung des wenigstens einen Aktuators oder
-- die Steuerung entweder des wenigstens einen Aktuators oder des wenigstens einen weiteren Aktuators
   durch die Steuerungseinrichtung erfolgt und/oder
   dass die Steuerungseinrichtung die Steuerungsnachricht zur Steuerung
-- des wenigstens einen Aktuators oder
-- entweder des wenigstens einen Aktuators oder des wenigstens einen weiteren Aktuators
generiert und/oder überträgt,
wobei insbesondere die Steuerung und/oder Generierung und/oder Übertragung der wenigstens einen Steuerungsnachricht in Abhängigkeit der Ortung der Bedienvorrichtung und in Abhängigkeit der detektierten Benutzerinteraktion dadurch realisiert wird, dass die Steuerung und/oder Generierung und/oder Übertragung der wenigstens einen Steuerungsnachricht kontextabhängig erfolgt, insbesondere zusätzlich in Abhängigkeit zurückliegender Bedienungsereignisse und/oder Bedienungsroutinen.

Hierdurch ist es erfindungsgemäß in vorteilhafter Weise möglich, dass durch die Zentralisierung der Steuerung des wenigstens einen Aktuators (bzw. der Steuerung entweder des wenigstens einen Aktuators oder des wenigstens einen weiteren Aktuators) durch die Steuerungseinrichtung (bzw. die Generierung bzw. Übertragung der entsprechenden Steuerungsnachricht zur Steuerung des wenigstens einen Aktuators (bzw. entweder des wenigstens einen Aktuators oder des wenigstens einen weiteren Aktuators) durch die Steuerungseinrichtung) in besonders effizienter Weise eine kontextabhängige Steuerung bzw. Bedienung der verschiedenen Gerät bzw. Aktuatoren möglich ist. Ferner ist hierdurch auch in besonders effizienter Weise eine dynamische Anpassung bzw. eine dynamische Anpassbarkeit der Steuerung bzw. Bedienung dahingehend möglich, dass über die Zeit gelernt wird, eine spezifische Benutzereingabe bzw. erkannte Benutzerinteraktion nuancierter zu interpretieren, beispielsweise bei der Einstellung einer Lautstärke (mit der ein Gerät (bzw. ein Aktuator) etwa einen Ton oder eine Sendung oder eine Audiowiedergabe vornimmt) oder bei der Einstellung einer Temperatur.

Des Weiteren wird die Aufgabe gelöst durch ein System gemäß Anspruch 8.

Es ist dadurch gemäß der vorliegenden Erfindung in vorteilhafter Weise möglich, ein erfindungsgemäßes System bereitzustellen.

Des Weiteren wird die Aufgabe gelöst durch eine Steuerungseinrichtung zur Verwendung in einem erfindungsgemäßen System oder in einem erfindungsgemäßen Verfahren.

Des Weiteren wird die Aufgabe gelöst durch ein Computerprogramm gemäß Anspruch 10 und ein computerlesbares Medium gemäß Anspruch 11.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

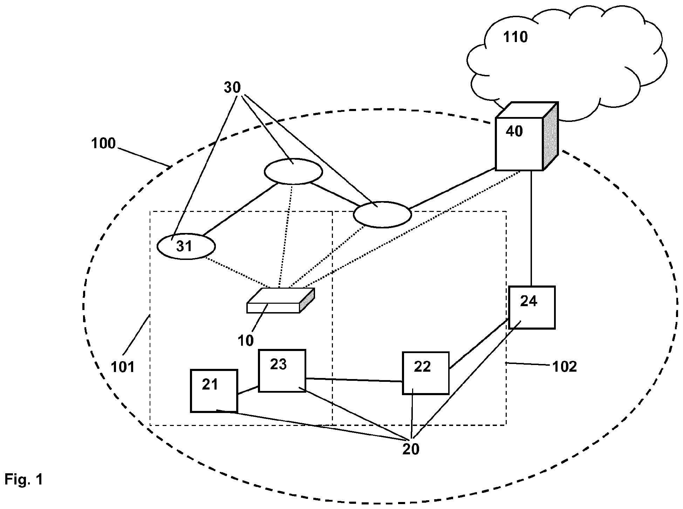

- **Figur** 1: zeigt eine schematische Ansicht eines erfindungsgemäßen Systems bzw. Smart-Home-Systems zur Steuerung wenigstens eines Aktuators und/oder zur Generierung und/oder Übertragung wenigstens einer Steuerungsnachricht zu dem wenigstens einen Aktuator.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt. Die vorliegende Erfindung wird in Bezug auf bestimmte Ausführungsformen und mit Bezug auf bestimmte Zeichnungen beschrieben, aber die Erfindung ist nicht hierauf beschränkt, sondern nur durch die Ansprüche beschränkt. Die beschriebenen Zeichnungen sind nur schematisch und nicht einschränkend aufzufassen. In den Zeichnungen kann die Größe einiger Elemente übertrieben sein und nicht im Maßstab zur Veranschaulichung gezeichnet sein.

Wenn ein unbestimmter oder bestimmter Artikel verwendet wird, wenn auf ein einzelnes Substantiv Bezug genommen wird, z.B. "ein", "eine", "eines", "der", "die", "das", schließt dies einen Plural dieses Substantivs ein, sofern nicht ausdrücklich etwas anderes angegeben ist.

Darüber hinaus werden die Begriffe erster/erste/erstes, zweiter/zweite/zweites, dritter/dritte/drittes und dergleichen in der Beschreibung und in den Ansprüchen zur Unterscheidung zwischen ähnlichen Elementen und nicht unbedingt zur Beschreibung einer sequentiellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderen Abfolgen als den hierin beschriebenen oder veranschaulichten funktionieren können.

In Figur 1 ist eine schematische Ansicht eines erfindungsgemäßen Systems bzw. Smart-Home-Systems zur Steuerung wenigstens eines Aktuators und/oder zur Generierung und/oder Übertragung wenigstens einer Steuerungsnachricht zu dem wenigstens einen Aktuator dargestellt.

Das erfindungsgemäße System ist in einem lokal begrenzten geographischen Bereich 100 lokalisier bzw. angeordnet. Innerhalb dieses lokal begrenzten geographischen Bereichs 100 sind wenigstens eine Mehrzahl von Aktuatoren bzw. zu steuernden Geräten angeordnet, etwa Lampen, Fernsehgeräte, Kaffeemaschinen, steuerbare Steckdosen, Rolladen- oder Jalousieaktuatoren, sonstige Smart-Home-Aktuatoren, etc. Hierbei ist in der schematischen Darstellung gemäß Figur 1 ein erster Aktuator 21, ein zweiter Aktuator 22, ein dritter Aktuator 23 und ein vierter Aktuator 24 schematisch mit den jeweiligen Bezugszeichen dargestellt. Gemeinsam bzw. zusammengefasst werden die Aktuatoren mit dem Bezugszeichen 20 bezeichnet. Die Darstellung in Figur 1 ist nicht einschränkend auf die Verwendung von vier Aktuatoren auszulegen, sondern ein erfindungsgemäßes System oder Smart-Home-System kann mehr oder auch weniger Aktuatoren als die in Figur 1 dargestellten aufweisen.

Der lokal begrenzte geographische Bereich 100 weist erfindungsgemäß insbesondere eine Mehrzahl von physisch abgeschlossenen bzw. abgetrennten oder aber nicht physisch abgeschlossenen bzw. abgetrennten Teilbereiche auf, welche insbesondere disjunkt zueinander sind. Beispielhaft ist in Figur 1 ein erster Teilbereich 101 des lokal begrenzten geographischen Bereichs 100 und ein zweiter Teilbereich 102 schematisch dargestellt. Insbesondere entspricht der erste Teilbereich 101 einem ersten Zimmer oder Raum und der zweite Teilbereich 102 entspricht einem zweiten Zimmer oder Raum.

Erfindungsgemäß weist das System ferner eine Bedienvorrichtung 10 auf, welche in Figur 1 beispielhaft als im Wesentlichen quaderförmige Vorrichtung dargestellt ist. Weiterhin weist das erfindungsgemäße System in dem lokal begrenzten geographischen Bereich 100 wenigstens eine Sensoreinrichtung 31 - bevorzugt jedoch eine Mehrzahl von Sensoreinrichtungen 30 - auf, mittels der die Bedienvorrichtung 10 innerhalb des lokal begrenzten geographischen Bereichs 100 ortbar ist.

Erfindungsgemäß weist das System ferner eine Steuerungseinrichtung 40 als Edge-Servereinrichtung (eines Telekommunikationsnetzes 110) zur Steuerung der Mehrzahl von Aktuatoren 20 auf bzw. ist diesem zugeordnet. Die Steuerungseinrichtung 40 ist als Edge-Servereinrichtung in dem lokal begrenzten geographischen Bereich 100 angeordnet. Alternativ hierzu ist dem lokal begrenzten geographischen Bereich 100 eine außerhalb dessen befindliche Steuerungseinrichtung 40 als Edge-Servereinrichtung zur Steuerung der Mehrzahl von Aktuatoren 20 zugeordnet.

In der Darstellung gemäß Figur 1 ist die Steuerungseinrichtung 40 sowohl mit den Aktuatoren 21, 22, 23, 24 als auch mit den Sensoreinrichtungen 30 mittels durchgezogene Linien verbunden dargestellt, während die Bedienvorrichtung 10 mit den Sensoreinrichtungen 30 und mit der Steuerungseinrichtung 40 mittels punktierter Linien verbunden dargestellt ist. Hierdurch soll beispielhaft veranschaulicht werden, dass die Sensoreinrichtungen 30 und/oder die Aktuatoren 21, 22, 23, 24 mit der Steuerungseinrichtung 40 beispielhaft über drahtgebundene Kommunikationskanäle miteinander verbunden sind, während beispielsweise die Bedienvorrichtung 10 mit den Sensoreinrichtungen 30 und/oder mit der Steuerungseinrichtung 40 drahtlos angebunden ist. Dies bedeutet jedoch nicht, dass jeder der Aktuatoren 21, 22, 23, 24 und/oder jede der Sensoreinrichtungen 30 in gleiche Weise angebunden sein muss (etwa drahtgebunden), sondern ausschließlich drahtlose Kommunikationskanäle oder auch die Verwendung von sowohl drahtgebundener Anbindung (etwa eines Teils der Aktuatoren 21, 22, 23, 24 und/oder der Sensoreinrichtungen 30) als auch von drahtloser Anbindung (etwa eines anderen Teils der Aktuatoren 21, 22, 23, 24 und/oder der Sensoreinrichtungen 30) ist erfindungsgemäß möglich und bevorzugt.

Die Bedienvorrichtung 10 ist in der Lage (bzw. mittels der Bedienvorrichtung 10 ist ein Benutzer des erfindungsgemäßen Systems in der Lage) eine Steuerung des wenigstens einen Aktuators 21 (bzw. ersten Aktuators 21) und eine Steuerung des wenigstens einen weiteren Aktuators 22 (bzw. zweiten Aktuators 22), vorzunehmen oder zu veranlassen. Dies erfolgt erfindungsgemäß derart, dass zum einen die Bedienvorrichtung eine Benutzerinteraktion detektiert (oder jedenfalls eine Benutzerinteraktion der Bedienvorrichtung 10 detektiert wird; d.h. die Detektion muss nicht zwingenderweise durch einen Sensor bzw. eine Sensierung innerhalb der Bedienvorrichtung 10 selbst erfolgen) und zum anderen die Bedienvorrichtung 10 innerhalb des lokal begrenzten geographischen Bereichs 100 geortet wird bzw. (im Zeitpunkt der Detektion der Benutzerinteraktion bereits) geortet ist. Aufgrund von sowohl der Ortung der Bedienvorrichtung 10 als auch der Detektion der Benutzerinteraktion in Bezug auf die Bedienvorrichtung 10 wird erfindungsgemäß entweder die Steuerung des wenigstens einen Aktuators 21 (bzw. ersten Aktuators 21) oder des wenigstens einen weiteren Aktuators 22 (bzw. zweiten Aktuators 22) vorgenommen. Dies bedeutet, dass - auch sofern die gleiche Benutzerinteraktion in Bezug auf die Bedienvorrichtung 10 detektiert wird und der einzige Unterschied zwischen zwei detektierten Benutzerinteraktionen darin besteht, dass sich die Bedienvorrichtung 10 beispielsweise einmal im ersten Teilbereich 101 und einmal im zweiten Teilbereich 102 des lokal begrenzten geographischen Bereichs 100 befindet - in Abhängigkeit der Ortung der Bedienvorrichtung 10 (innerhalb des lokal begrenzten geographischen Bereichs 100) und in Abhängigkeit der detektierten Benutzerinteraktion in Bezug auf die Bedienvorrichtung 10 entweder der wenigstens eine Aktuator 21 (bzw. erste Aktuator 21) oder aber der wenigstens eine weitere Aktuator 22 (bzw. zweite Aktuator 22) gesteuert wird bzw. eine Steuerungsnachricht generiert und/oder zum jeweiligen Aktuator 21, 22 übertragen wird.

Dies bedeutet, dass beim erfindungsgemäßen Verfahren zur Steuerung des ersten Aktuators 21 oder des zweiten Aktuators 22 und/oder zur Generierung und/oder Übertragung wenigstens einer Steuerungsnachricht zum ersten Aktuator 21 oder zum zweiten Aktuator 22)
-- in einem ersten Schritt eine Ortung der Bedienvorrichtung 10 innerhalb des lokal begrenzten geographischen Bereichs 100 vorgenommen wird,
-- in einem zweiten Schritt eine Benutzerinteraktion in Bezug auf die Bedienvorrichtung 10 detektiert wird und
-- in einem dritten Schritt der wenigstens eine Aktuator 21 in Abhängigkeit der Ortung der Bedienvorrichtung 10 innerhalb des lokal begrenzten geographischen Bereichs 100 und in Abhängigkeit der detektierten Benutzerinteraktion in Bezug auf die Bedienvorrichtung 10 gesteuert wird oder eine Steuerungsnachricht generiert und/oder zu dem wenigstens einen Aktuator 21 übertragen wird. Erfindungsgemäß wird der dritte Schritt insbesondere nach dem ersten und/oder dem zweiten Schritt durchgeführt, wobei die Reihenfolge der Durchführung des ersten und zweiten Schritts in der Regel unerheblich ist bzw. diese Schritte auch zumindest teilweise zeitlich überlappend erfolgen können.

Erfindungsgemäß umfasst ein erfindungsgemäßes System insbesondere die folgenden Komponenten: mindestens einen Sensor (A) bzw. Sensoreinrichtung 30, 31, mindestens einen Aktor (B) bzw. Aktuator 20, 21, eine Sende- bzw. Empfangseinheit (C), eine Auswerte-/Schalteinheit (D) bzw. Steuerungseinrichtung 40 und eine Interaktion durch den Nutzer (E). Hierbei können für die Punkte (A) bis (E) verschiedene Technologien zum Einsatz kommen: Beispielsweise ist es erfindungsgemäß möglich und bevorzugt, dass der mindestens eine Sensor (A) eine Kamera ist oder umfasst oder eine Vorrichtung zur Funk-Triangulation ist oder umfasst oder ein Mikrofon ist oder umfasst, etc. Ferner ist es erfindungsgemäß beispielsweise möglich und bevorzugt, dass der mindestens eine Aktor (B) eine Lampe, ein Jalousienaktuator, ein Fernseher, eine Stereoanlage, eine Heizung, etc. ist. Ferner ist es erfindungsgemäß beispielsweise möglich und bevorzugt, dass die Sende- bzw. Empfangseinheit (C) bzw. die Funktionalität der verschiedenen Systemkomponenten auf (Funk)Technologien wie WLAN, NB-IOT, LTE etc. beruhen. Ferner ist es erfindungsgemäß beispielsweise möglich und bevorzugt, dass die Auswerte-/Schalteinheit (D) bzw. Steuerungseinrichtung 40 als ein Edge-Based Server in einem Telekommunikationsnetz 110 oder als ein Edge Server als Campus-Installation realisiert ist. Ferner ist es erfindungsgemäß beispielsweise möglich und bevorzugt, dass die Interaktion durch den Nutzer (E) als eine Bewegung bzw. ein Bewegen eines physikalischen Objektes, als eine Geste, und/oder als eine Spracheingabe realisiert ist.

Erfindungsgemäß ist insbesondere die Interaktion des Nutzers (bzw. die Benutzerinteraktion) kontextabhängig und es erfolgt eine kontextabhängige Interpretation/Auswertung von Interaktion (bzw. Benutzerinteraktion) in der Steuerungseinrichtung 40 (d.h. in der Edge-Servereinrichtung), welche sich in der Regel innerhalb eines Telekommunikationsnetzes 110 befindet bzw. Teil eines Telekommunikationsnetzes 110 ist.

Erfindungsgemäß ist es ferner von Vorteil, dass ein Mesh-Ansatz realisiert ist, bei dem beliebige Sensoren, Aktoren und Interaktionsmöglichkeiten kombiniert werden können.

Ferner ist es erfindungsgemäß vorgesehen, dass unabhängig von der Ausprägung des Systems der Kontext in der Steuerungseinrichtung 40 entweder programmiert wird, um verschiedene Aktionen abhängig vom Kontext auszuführen, oder aber die Steuerungseinrichtung 40 beruht auf lernenden Systemen, die über die Zeit den Nutzer und seine Vorlieben verstehen bzw. die Steuerung derart vornehmen, dass eine Anpassung an regelmäßig vorgenommene benutzerinduzierte Änderungen der Steuerung vorgenommen werden.

Gemäß einem Beispiel entspricht die Bedienvorrichtung 10 einem 5×5×1cm großen Quader, den ein Benutzer beispielsweise in der Hand hält. Der Quader (bzw. die Bedienvorrichtung 10) wird in einer Wohnung (etwa des Nutzers) sowohl in der Orientierung (welche Seite ist oben) als auch in der Position (in welchem Raum befindet sich die Bedienvorrichtung 10) erfasst.
Hierbei ist es unabhängig, ob eine Sensorik im Quader (z.B. Gyro) bzw. in der Bedienvorrichtung 10 oder außerhalb der Bedienvorrichtung 10 angeordnet ist (z.B. via Bluetooth-Triangulation) bzw. ob die Bedienvorrichtung 10 selbst Signale sendet (z.B. mittels einer Bluetooth-Verbindung) oder nicht (z.B. mittels einer Erfassung über eine Kamera). Ist der Nutzer beispielsweise in einem ersten Raum 101, kann er dort eine bestimmte Lampe (etwa der erste Aktuator 21) durch Drehen der Bedienvorrichtung 10 an- und ausschalten. Ist der Nutzer in einem zweiten Raum 102 kann er dort den Fernseher (etwa der zweite Aktuator 22) durch drehen des der Bedienvorrichtung 10 an- und ausschalten. Ist der Nutzer in einem dritten Raum kann er dort die Jalousien durch drehen der Bedienvorrichtung 10 hoch- und herunterfahren.

Gemäß einem weiteren Beispiel kommt der Nutzer kommt in den ersten Raum 101 und sagt "Licht an". Die Mikrofone der Bedienvorrichtung 10 senden die aufgenommen Signale an die Auswerteeinheit, insbesondere die Steuerungseinrichtung 40. Dort wird der Inhalt der Signale erkannt als auch erkannt in welchem Kontext die Signale aufgenommen wurden, d.h. in welchem Raum sich der Nutzer befindet. Also wird das Licht im ersten Raum 101 eingeschaltet. Die gleiche Aussage "Licht an" im zweiten Raum 102 führt dazu, dass das Licht im zweiten Raum 102 eingeschaltet wird.

Aufgrund der Realisierung der Steuerungseinrichtung 40 als Edge-Servereinrichtung, d.h. die Realisierung des erfindungsgemäßen System in Edge-Architektur, erlaubt es, dass die Geräte ihren Zustand und Kontext selbst steuern und/oder unter Zuhilfenahme eines Netzwerkes bzw. dass ihrerseits Aktionen direkt ohne weitere Einbindung des Netzwerkes ausgelöst werden.

Die direkte Kommunikation mit dem die Aktion ausführenden Gerät B, d.h. mit dem Aktuator 20 - ohne zwischengeschaltete Netzwerkinstanz, welche etwa bei einer Realisierung in Cloud-Technologie der Fall wäre - erhöht einerseits die Geschwindigkeit und führt daher zu einem schnelleren Gesamtsystem und auch die Effizienz, da eine Netzwerkinstanz nicht notwendig ist und falls (doch) vorhanden, keine (Netzwerk-Ressourcen blockiert werden. Letztlich wird hierdurch aus die Ausfallsicherheit erhöht, da Latenzen/Ausfälle in der aus der Cloud bekannten Form keine Auswirkungen haben.

Ein weiterer Vorteil des erfindungsgemäßen Verfahrens bzw. des erfindungsgemäßen Systems sind die damit verbundenen vergleichsweise geringen Gesamtkosten: Statt vieler verschiedener mehr oder weniger intelligenter Fernbedienungen reicht ein einfaches Objekt (d.h. die Bedienvorrichtung 10) zur Steuerung verschiedenster Objekte bzw. zur Steuerung verschiedenster Aktuatoren 20, da die zentrale Intelligenz und Auswertelogik nicht im Gerät (d.h. in den Aktuatoren 20), sondern sich in der Steuerungseinrichtung 40 befindet, welche als Edge-Servereinrichtung ausgebildet ist.

Ein weiterer erfindungsgemäßer Vorteil ist, dass einer Interaktion mit z.B. nur zwei Zuständen die Anzahl von Aktionen (Funktionen) entsprechend seiner Auflösungsgenauigkeit des Kontextes zugeordnet werden kann. Ein sehr einfaches Gerät kann daher hochkomplexe Aufgaben übernehmen. Umgekehrt vereinfacht sich die Anwendung für den Nutzer, da keine komplexen Befehlsketten eingegeben werden müssen, d.h. beispielsweise wird aus dem Befehl "Alexa schalte das Licht im Wohnzimmer aus" der einfachere Befehl "Alexa, Licht aus", wobei kontextabhängig aufgrund der Position der Bedienvorrichtung 10 (in der vorliegenden Situation "im Wohnzimmer") geschlossen wird, dass das Licht dort ausgeschaltet werden soll.

Durch die Verlagerung der Intelligenz in die Steuerungseinrichtung 40 und somit in eine Edge-Servereinrichtung können beliebige neue aber auch vorhandene Sensoren und Aktuatoren und Interaktionen miteinander kombiniert werden. So kann z.B. eine vorhandene Babykamera als Sensor dienen, die Gesten des Nutzers erkennt mit denen er das Licht im Kinderzimmer steuert. Über diesen Ansatz können in vorteilhafter Weise die Lebenszyklen von Technologiebauteilen in Smart-Home-Systemen, insbesondere in Häusern, deutlich verlängert werden.

## Patentansprüche

1. Verfahren zur Steuerung wenigstens eines Aktuators (21) eines Smart-Home-Systems und/oder zur Generierung und/oder Übertragung wenigstens einer Steuerungsnachricht zu dem wenigstens einen Aktuator (21) des Smart-Home-Systems unter Verwendung einer Bedienvorrichtung (10),
wobei der Aktuator (21) Teil einer Mehrzahl von Aktuatoren (20) ist, die in einem lokal begrenzten geographischen Bereich (100) des Smart-Home-Systems angeordnet oder vorhanden sind und die in dem lokal begrenzten geographischen Bereich (100) direkt oder indirekt miteinander verbunden sind,
wobei eine Steuerungseinrichtung (40) als Edge-Servereinrichtung zur Steuerung der Mehrzahl von Aktuatoren (20) in dem lokal begrenzten geographischen Bereich (100) angeordnet ist oder dem lokal begrenzten geographischen Bereich (100) eine außerhalb dessen befindliche Steuerungseinrichtung (40) als Edge-Servereinrichtung zur Steuerung der Mehrzahl von Aktuatoren (20) zugeordnet ist, wobei in dem lokal begrenzten geographischen Bereich (100) wenigstens eine Sensoreinrichtung (31) vorhanden ist, mittels der die Bedienvorrichtung (10) innerhalb des lokal begrenzten geographischen Bereichs (100) ortbar ist,
wobei zur Steuerung des wenigstens einen Aktuators (21) und/oder zur Generierung und/oder Übertragung wenigstens einer Steuerungsnachricht zu dem wenigstens einen Aktuator (21)
-- in einem ersten Schritt eine Ortung der Bedienvorrichtung (10) innerhalb des lokal begrenzten geographischen Bereichs (100) vorgenommen wird,
-- in einem zweiten Schritt eine Benutzerinteraktion in Bezug auf die Bedienvorrichtung (10) detektiert wird und
-- in einem dritten Schritt der wenigstens eine Aktuator (21) in Abhängigkeit der Ortung der Bedienvorrichtung (10) innerhalb des lokal begrenzten geographischen Bereichs (100) und in Abhängigkeit der detektierten Benutzerinteraktion in Bezug auf die Bedienvorrichtung (10) gesteuert wird oder eine Steuerungsnachricht generiert und/oder zu dem wenigstens einen Aktuator (21) übertragen wird,
wobei zur Ortung der Bedienvorrichtung (10) innerhalb des lokal begrenzten geographischen Bereichs (100) eine Ortsinformation generiert wird oder vorhanden ist und/oder
wobei die Ortung der Bedienvorrichtung (10) innerhalb des lokal begrenzten geographischen Bereichs (100) wenigstens derart vorgenommen wird, dass detektiert wird, ob die Bedienvorrichtung (10) in einem ersten Teilbereich (101) des lokal begrenzten geographischen Bereichs (100) oder in einem zweiten Teilbereich (102) des lokal begrenzten geographischen Bereichs (100) angeordnet ist, wobei der erste und zweite Teilbereich (101, 102) des lokal begrenzten geographischen Bereichs (100) disjunkt sind, wobei der erste Teilbereich (101) einem ersten Zimmer oder Raum entspricht und wobei der zweite Teilbereich (102) einem zweiten Zimmer oder Raum entspricht,
wobei die Bedienvorrichtung (10) - neben dem wenigstens einen Aktuator (21) - auch zur Steuerung wenigstens eines weiteren Aktuators (22) verwendet wird oder verwendbar ist, wobei der wenigstens eine Aktuator (21) dem ersten Teilbereich (101) des lokal begrenzten geographischen Bereichs (100) zugeordnet ist oder in diesem angeordnet ist und wobei der wenigstens eine weitere Aktuator (22) dem zweiten Teilbereich (102) des lokal begrenzten geographischen Bereichs (100) zugeordnet ist oder in diesem angeordnet ist,
wobei
-- in Abhängigkeit der Ortsinformation oder der Detektion, ob die Bedienvorrichtung (10) im ersten Teilbereich (101) des lokal begrenzten geographischen Bereichs (100) oder im zweiten Teilbereich (102) des lokal begrenzten geographischen Bereichs (100) angeordnet ist,
-- entweder der wenigstens eine Aktuator (21) oder der wenigstens eine weitere Aktuator (22) in Abhängigkeit der detektierten Benutzerinteraktion in Bezug auf die Bedienvorrichtung (10) gesteuert wird oder eine Steuerungsnachricht generiert und/oder zu entweder dem wenigstens einen Aktuator (21) oder dem wenigstens einen weiteren Aktuator (22) übertragen wird.

2. Verfahren nach Anspruch 1, **dadurch gekennzeichnet, dass** der lokal begrenzte geographische Bereich (100) einer Wohnung oder einem Gebäude oder Haus oder einem Grundstück oder einer Mehrzahl von Grundstücken entspricht, insbesondere das Grundstück oder die Mehrzahl von Grundstücken umfassend eine Mehrzahl von Wohnungen oder Häusern oder Gebäuden, wobei der lokal begrenzte geographische Bereich (100) jedoch insbesondere kleiner als ein Land oder eine Stadt oder ein Stadtteil ist.

3. Verfahren nach einem der vorhergehenden Ansprüche, **dadurch gekennzeichnet, dass** zur Detektion der Benutzerinteraktion in Bezug auf die Bedienvorrichtung (10) eines oder mehrere der folgenden Verfahren verwendet wird, wobei eine Interaktionsinformation generiert wird:
-- durch Detektion einer rotativen und/oder translativen Lageänderung der Bedienvorrichtung (10),
insbesondere mittels eines Orientierungs- oder Lagedetektors als Teil der Bedienvorrichtung (10) - umfassend wenigstens einen Inertialsensor - oder mittels eines außerhalb der Bedienvorrichtung (10) angeordneten Orientierungs- oder Lagedetektors,
-- durch Detektion eines optischen Signals oder eines Bildsignals oder eines Videosignals durch die Bedienvorrichtung (10) oder durch einen außerhalb der Bedienvorrichtung (10) angeordneten optischen Sensor oder Videosensor, insbesondere mittels einer Kameraeinrichtung der Bedienvorrichtung (10) oder einer außerhalb der Bedienvorrichtung (10) angeordneten Kameraeinrichtung,
-- durch Detektion eines akustischen Signals durch die Bedienvorrichtung (10) oder durch einen akustischen Sensor außerhalb der Bedienvorrichtung (10).

4. Verfahren nach einem der vorhergehenden Ansprüche, **dadurch gekennzeichnet, dass** zur Ortung der Bedienvorrichtung (10) innerhalb des lokal begrenzten geographischen Bereichs (100) die Bedienvorrichtung (10) die wenigstens eine Sensoreinrichtung (31) umfasst,
wobei die Sensoreinrichtung (31) insbesondere in Form eines Positions- oder Lagedetektors ausgebildet ist, der einen Inertialsensor oder eine Mehrzahl von Inertialsensoren und/oder einen Drucksensor und/oder einen Magnetfeldsensor oder Kompass aufweist.

5. Verfahren nach einem der vorhergehenden Ansprüche, **dadurch gekennzeichnet, dass** zur Ortung der Bedienvorrichtung (10) innerhalb des lokal begrenzten geographischen Bereichs (100) die Bedienvorrichtung (10) mit der Sensoreinrichtung (31) oder mit einer Mehrzahl von Sensoreinrichtungen (30) in Wechselwirkung tritt,
insbesondere durch Empfang und/oder Aussendung von elektromagnetischen Signalen und/oder durch die Auswertung, insbesondere der Stärke oder Feldstärke, von empfangenen elektromagnetischen Signalen.

6. Verfahren nach einem der vorhergehenden Ansprüche, **dadurch gekennzeichnet, dass** die Ortung der Bedienvorrichtung (10) innerhalb des lokal begrenzten geographischen Bereichs (100) mittels eines oder mehrerer der folgenden Verfahren erfolgt:
-- mittels Triangulation unter Verwendung einer Kurzreichweiten-Funktechnologie zwischen der Mehrzahl von Sensoreinrichtungen (30) einerseits und der Bedienvorrichtung (10) andererseits, wobei als Kurzreichweiten-Funktechnologie insbesondere Bluetooth und/oder Zigbee und/oder eine Near Field Communication-Funktechnologie und/oder eine Device-to-Device-Funktechnologie verwendet wird,
-- unter Nutzung eines globalen Satellitennavigationssystems und/oder unter Nutzung eines satellitenbasierten Ergänzungssystems und/oder unter Nutzung eines differentiellen globalen Positionierungssystems unterstützten globalen Satellitenpositionierungssystems, wobei insbesondere die Positionierung der Bedienvorrichtung (10) durch die Bedienvorrichtung (10) selbst oder durch die Sensoreinrichtung (31) der Bedienvorrichtung (10) erfolgt.

7. Verfahren nach einem der vorhergehenden Ansprüche, **dadurch gekennzeichnet, dass**
-- die Steuerung des wenigstens einen Aktuators (21) oder
-- die Steuerung entweder des wenigstens einen Aktuators (21) oder des wenigstens einen weiteren Aktuators (22)
durch die Steuerungseinrichtung (40) erfolgt und/oder
dass die Steuerungseinrichtung (40) die Steuerungsnachricht zur Steuerung
-- des wenigstens einen Aktuators (21) oder
-- entweder des wenigstens einen Aktuators (21) oder des wenigstens einen weiteren Aktuators (22)
generiert und/oder überträgt,
wobei insbesondere die Steuerung und/oder Generierung und/oder Übertragung der wenigstens einen Steuerungsnachricht in Abhängigkeit der Ortung der Bedienvorrichtung (10) und in Abhängigkeit der detektierten Benutzerinteraktion dadurch realisiert wird, dass die Steuerung und/oder Generierung und/oder Übertragung der wenigstens einen Steuerungsnachricht kontextabhängig erfolgt, insbesondere zusätzlich in Abhängigkeit zurückliegender Bedienungsereignisse und/oder Bedienungsroutinen.

8. System zur Steuerung wenigstens eines Aktuators (21) eines Smart-Home-Systems und/oder zur Generierung und/oder Übertragung wenigstens einer Steuerungsnachricht zu dem wenigstens einen Aktuator (21) des Smart-Home-Systems unter Verwendung einer Bedienvorrichtung (10),
wobei der Aktuator (21) Teil einer Mehrzahl von Aktuatoren (20) ist, die in einem lokal begrenzten geographischen Bereich (100) des Smart-Home-Systems angeordnet oder vorhanden sind und die in dem lokal begrenzten geographischen Bereich (100) direkt oder indirekt miteinander verbunden sind,
wobei eine Steuerungseinrichtung (40) als Edge-Servereinrichtung zur Steuerung der Mehrzahl von Aktuatoren (20) in dem lokal begrenzten geographischen Bereich (100) angeordnet ist oder dem lokal begrenzten geographischen Bereich (100) eine außerhalb dessen befindliche Steuerungseinrichtung (40) als Edge-Servereinrichtung zur Steuerung der Mehrzahl von Aktuatoren (20) zugeordnet ist, wobei in dem lokal begrenzten geographischen Bereich (100) wenigstens eine Sensoreinrichtung (31) vorhanden ist, mittels der die Bedienvorrichtung (10) innerhalb des lokal begrenzten geographischen Bereichs (100) ortbar ist, wobei das System die Bedienvorrichtung (10), die Sensoreinrichtung (31) und die Steuerungseinrichtung (40) umfasst,
wobei zur Steuerung des wenigstens einen Aktuators (21) und/oder zur Generierung und/oder Übertragung wenigstens einer Steuerungsnachricht zu dem wenigstens einen Aktuator (21) das System derart konfiguriert ist, dass
-- eine Ortung der Bedienvorrichtung (10) innerhalb des lokal begrenzten geographischen Bereichs (100) vorgenommen wird,
-- eine Benutzerinteraktion in Bezug auf die Bedienvorrichtung (10) detektiert wird und
-- der wenigstens eine Aktuator (21) in Abhängigkeit der Ortung der Bedienvorrichtung (10) innerhalb des lokal begrenzten geographischen Bereichs (100) und in Abhängigkeit der detektierten Benutzerinteraktion in Bezug auf die Bedienvorrichtung (10) gesteuert wird oder eine Steuerungsnachricht generiert und/oder zu dem wenigstens einen Aktuator (21) übertragen wird,
wobei das System derart konfiguriert ist, dass
- zur Ortung der Bedienvorrichtung (10) innerhalb des lokal begrenzten geographischen Bereichs (100) eine Ortsinformation generiert wird oder vorhanden ist und/oder
die Ortung der Bedienvorrichtung (10) innerhalb des lokal begrenzten geographischen Bereichs (100) wenigstens derart vorgenommen wird, dass detektiert wird, ob die Bedienvorrichtung (10) in einem ersten Teilbereich (101) des lokal begrenzten geographischen Bereichs (100) oder in einem zweiten Teilbereich (102) des lokal begrenzten geographischen Bereichs (100) angeordnet ist, wobei der erste und zweite Teilbereich (101, 102) des lokal begrenzten geographischen Bereichs (100) disjunkt sind, wobei der erste Teilbereich (101) einem ersten Zimmer oder Raum entspricht und wobei der zweite Teilbereich (102) einem zweiten Zimmer oder Raum entspricht,
wobei das System derart konfiguriert ist, dass die Bedienvorrichtung (10) - neben dem wenigstens einen Aktuator (21) - auch zur Steuerung wenigstens eines weiteren Aktuators (22) verwendet wird oder verwendbar ist, wobei der wenigstens eine Aktuator (21) dem ersten Teilbereich (101) des lokal begrenzten geographischen Bereichs (100) zugeordnet ist oder in diesem angeordnet ist und wobei der wenigstens eine weitere Aktuator (22) dem zweiten Teilbereich (102) des lokal begrenzten geographischen Bereichs (100) zugeordnet ist oder in diesem angeordnet ist, wobei das System derart konfiguriert ist, dass
-- in Abhängigkeit der Ortsinformation oder der Detektion, ob die Bedienvorrichtung (10) im ersten Teilbereich (101) des lokal begrenzten geographischen Bereichs (100) oder im zweiten Teilbereich (102) des lokal begrenzten geographischen Bereichs (100) angeordnet ist,
-- entweder der wenigstens eine Aktuator (21) oder der wenigstens eine weitere Aktuator (22) in Abhängigkeit der detektierten Benutzerinteraktion in Bezug auf die Bedienvorrichtung (10) gesteuert wird oder eine Steuerungsnachricht generiert und/oder zu entweder dem wenigstens einen Aktuator (21) oder dem wenigstens einen weiteren Aktuator (22) übertragen wird.

9. Steuerungseinrichtung (40) ertüchtigt für die Verwendung in einem Verfahren nach Anspruch 7.

10. Computerprogramm umfassend Befehle, mit deren Hilfe die Schritte eines Verfahrens nach einem der Ansprüche 1 bis 7 durchführbar sind, wenn das Computerprogramm auf einer programmierbaren Einrichtung als Teil des Systems ausgeführt wird.

11. Computerlesbares Medium, vorgesehen zur Speicherung eines Computerprogramms, wobei das computerlesbare Medium das Computerprogramm nach Anspruch 10 speichert.

## Claims

1. Method for controlling at least one actuator (21) of a smart home system and/or for generating and/or transmitting at least one control message to the at least one actuator (21) of the smart home system using an operating apparatus (10),
wherein the actuator (21) is part of a plurality of actuators (20) which are disposed or present in a locally defined geographical area (100) of the smart home system and which are connected to one another directly or indirectly in the locally defined geographical area (100),
wherein a control device (40) is disposed as an edge server device for controlling the plurality of actuators (20) in the locally defined geographical area (100) or the locally defined geographical area (100) is allocated a control device (40), located outside thereof, as an edge server device for controlling the plurality of actuators (20),
wherein the locally defined geographical area (100) has at least one sensor device (31) present therein, by means of which the operating apparatus (10) can be located within the locally defined geographical area (100),
wherein, in order to control the at least one actuator (21) and/or to generate and/or transmit at least one control message to the at least one actuator (21),
- in a first step, the operating apparatus (10) is located within the locally defined geographical area (100),
- in a second step a user interaction in relation to the operating apparatus (10) is detected, and
- in a third step, the at least one actuator (21) is controlled in dependence upon the locating of the operating apparatus (10) within the locally defined geographical area (100) and in dependence upon the detected user interaction in relation to the operating apparatus (10) or a control message is generated and/or transmitted to the at least one actuator (21),
wherein, in order to locate the operating apparatus (10) within the locally defined geographical area (100), location information is generated or is present and/or
wherein the operating apparatus (10) is located within the locally defined geographical area (100) at least in such a manner that it is detected whether the operating apparatus (10) is disposed in a first partial area (101) of the locally defined geographical area (100) or in a second partial area (102) of the locally defined geographical area (100), wherein the first and second partial area (101, 102) of the locally defined geographical area (100) are unconnected, wherein the first partial area (101) corresponds to a first room or space and wherein the second partial area (102) corresponds to a second room or space,
wherein the operating apparatus (10) is used or can be used to control - not only the at least one actuator (21) - but also at least one further actuator (22), wherein the at least one actuator (21) is allocated to the first partial area (101) of the locally defined geographical area (100) or is disposed therein and wherein the at least one further actuator (22) is allocated to the second partial area (102) of the locally defined geographical area (100) or is disposed therein,
wherein
- in dependence upon the location information or the detection whether the operating apparatus (10) is disposed in the first partial area (101) of the locally defined geographical area (100) or in the second partial area (102) of the locally defined geographical area (100),
- either the at least one actuator (21) or the at least one further actuator (22) is controlled in dependence upon the detected user interaction in relation to the operating apparatus (10) or a control message is generated and/or transmitted to either the at least one actuator (21) or the at least one further actuator (22) .

2. Method as claimed in claim 1, **characterised in that** the locally defined geographical area (100) corresponds to an apartment or a building or house or a plot of land or a plurality of plots of land, in particular the plot of land or the plurality of plots of land comprising a plurality of apartments or houses or buildings, wherein, however, the locally defined geographical area (100) is, in particular, smaller than a country, city or district.

3. Method as claimed in any one of the preceding claims, **characterised in that**, in order to detect the user interaction in relation to the operating apparatus (10) one or more of the following methods is used, wherein interaction information is generated:
- by detecting a rotative and/or translative location change of the operating apparatus (10),
in particular by means of an orientation or location detector as part of the operating apparatus (10) - comprising at least one inertial sensor - or by means of an orientation or location detector disposed outside the operating apparatus (10),
- by detecting an optical signal or an image signal or a video signal by means of the operating apparatus (10) or by means of an optical sensor or video sensor disposed outside the operating apparatus (10), in particular by means of a camera device of the operating apparatus (10) or a camera device disposed outside the operating apparatus (10),
- by detecting an acoustic signal by means of the operating apparatus (10) or by means of an acoustic sensor outside the operating apparatus (10).

4. Method as claimed in any one of the preceding claims, **characterised in that**, in order to locate the operating apparatus (10) within the locally defined geographical area (100), the operating apparatus (10) comprises the at least one sensor device (31),
wherein the sensor device (31) is designed in particular in the form of a position or location detector which has an inertial sensor or a plurality of inertial sensors and/or a pressure sensor and/or a magnetic field sensor or compass.

5. Method as claimed in any one of the preceding claims, **characterised in that**, in order to locate the operating apparatus (10) within the locally defined geographical area (100), the operating apparatus (10) interacts with the sensor device (31) or with a plurality of sensor devices (30),
in particular by receiving and/or emitting electromagnetic signals and/or by evaluating received electromagnetic signals, in particular the strength or field strength thereof.

6. Method as claimed in any one of the preceding claims, **characterised in that** the operating apparatus (10) is located within the locally defined geographical area (100) by means of one or more of the following methods:
- by means of triangulation using a short-range wireless technology between the plurality of sensor devices (30) on the one hand and the operating apparatus (10) on the other hand, wherein in particular Bluetooth and/or Zigbee and/or Near Field Communication wireless technology and/or device-to-device wireless technology is used as the short-range wireless technology,
- using a global satellite navigation system and/or using a satellite-based supplementary system and/or using a differential global positioning system-assisted global satellite positioning system, wherein, in particular, the operating apparatus (10) is positioned by means of the operating apparatus (10) itself or by means of the sensor device (31) of the operating apparatus (10).

7. Method as claimed in any one of the preceding claims, **characterised in that**
- the at least one actuator (21) or
- either the at least one actuator (21) or the at least one further actuator (22)
is controlled by means of the control device (40) and/or in that the control device (40) generates and/or transmits
the control message in order to control
- the at least one actuator (21) or
- either the at least one actuator (21) or the at least one further actuator (22),
wherein, in particular, the at least one control message is controlled and/or generated and/or transmitted in dependence upon the locating of the operating apparatus (10) and in dependence upon the detected user interaction by virtue of the fact that the at least one control message is controlled and/or generated and/or transmitted in a context-dependent manner, in particular additionally in dependence upon previous operating events and/or operating routines.

8. System for controlling at least one actuator (21) of a smart home system and/or for generating and/or transmitting at least one control message to the at least one actuator (21) of the smart home system using an operating apparatus (10),
wherein the actuator (21) is part of a plurality of actuators (20) which are disposed or present in a locally defined geographical area (100) of the smart home system and which are connected to one another directly or indirectly in the locally defined geographical area (100),
wherein a control device (40) is disposed as an edge server device for controlling the plurality of actuators (20) in the locally defined geographical area (100) or the locally defined geographical area (100) is allocated a control device (40), located outside thereof, as an edge server device for controlling the plurality of actuators (20),
wherein the locally defined geographical area (100) has at least one sensor device (31) present therein, by means of which the operating apparatus (10) can be located within the locally defined geographical area (100), wherein the system comprises the operating apparatus (10), the sensor device (31) and the control device (40),
wherein, in order to control the at least one actuator (21) and/or to generate and/or transmit at least one control message to the at least one actuator (21), the system is configured such that
- the operating apparatus (10) is located within the locally defined geographical area (100),
- a user interaction in relation to the operating apparatus (10) is detected, and
- the at least one actuator (21) is controlled in dependence upon the locating of the operating apparatus (10) within the locally defined geographical area (100) and in dependence upon the detected user interaction in relation to the operating apparatus (10) or a control message is generated and/or transmitted to the at least one actuator (21),
wherein the system is configured such that
- in order to locate the operating apparatus (10) within the locally defined geographical area (100), location information is generated or is present and/or
the operating apparatus (10) is located within the locally defined geographical area (100) at least in such a manner that it is detected whether the operating apparatus (10) is disposed in a first partial area (101) of the locally defined geographical area (100) or in a second partial area (102) of the locally defined geographical area (100),
wherein the first and second partial area (101, 102) of the locally defined geographical area (100) are unconnected, wherein the first partial area (101) corresponds to a first room or space and wherein the second partial area (102) corresponds to a second room or space,
wherein the system is configured such that the operating apparatus (10) is used or can be used to control - not only the at least one actuator (21) - but also at least one further actuator (22), wherein the at least one actuator (21) is allocated to the first partial area (101) of the locally defined geographical area (100) or is disposed therein and wherein the at least one further actuator (22) is allocated to the second partial area (102) of the locally defined geographical area (100) or is disposed therein,
wherein the system is configured such that
- in dependence upon the location information or the detection whether the operating apparatus (10) is disposed in the first partial area (101) of the locally defined geographical area (100) or in the second partial area (102) of the locally defined geographical area (100),
- either the at least one actuator (21) or the at least one further actuator (22) is controlled in dependence upon the detected user interaction in relation to the operating apparatus (10) or a control message is generated and/or transmitted to either the at least one actuator (21) or the at least one further actuator (22) .

9. Control device (40) suitable for use in a method as claimed in claim 7.

10. Computer program comprising instructions, with the aid of which the steps of a method as claimed in any one of claims 1-7 can be performed, when the computer program is executed on a programmable device as part of the system.

11. Computer-readable medium, provided for storing a computer program, wherein the computer-readable medium stores the computer program as clamed in claim 10.

## Revendications

1. Procédé pour commander au moins un actionneur (21) d'un système domotique intelligent et/ou pour générer et/ou transmettre au moins un message de commande au au moins un actionneur (21) du système domotique intelligent en utilisant un dispositif de commande (10),
dans lequel l'actionneur (21) fait partie d'une pluralité d'actionneurs (20) qui sont agencés ou présents dans une zone géographique localement limitée (100) du système domotique intelligent et qui sont directement ou indirectement connectés les uns aux autres dans la zone géographique localement limitée (100),
dans lequel un dispositif de commande (40) est agencé en tant que dispositif de serveur périphérique pour commander la pluralité d'actionneurs (20) dans la zone géographique localement limitée (100) ou un dispositif de commande (40) situé à l'extérieur de celui-ci est affecté à la zone géographique localement limitée (100) en tant que dispositif de serveur périphérique pour commander la pluralité d'actionneurs (20),
dans lequel au moins un dispositif de capteur (31) est présent dans la zone géographique localement limitée (100), au moyen duquel le dispositif de commande (10) peut être localisé à l'intérieur de la zone géographique localement limitée (100),
dans lequel pour commander l'actionneur (21) et/ou pour générer et/ou transmettre au moins un message de commande à l'actionneur (21) :
- à une première étape, une localisation du dispositif de commande (10) est effectuée à l'intérieur de la zone géographique localement limitée (100),
- à une deuxième étape, une interaction de l'utilisateur par rapport au dispositif de commande (10) est détectée et
- à une troisième étape, le au moins un actionneur (21) est commandé en fonction de la localisation du dispositif de commande (10) à l'intérieur de la zone géographique localement limitée (100) et en fonction de l'interaction de l'utilisateur détectée par rapport au dispositif de commande (10), ou un message de commande est généré et/ou transmis au au moins un actionneur (21),
dans lequel une information de localisation est générée ou présente pour localiser le dispositif de commande (10) à l'intérieur de la zone géographique localement limitée (100) et/ou
dans lequel la localisation du dispositif de commande (10) à l'intérieur de la zone géographique localement limitée (100) est au moins effectuée de telle sorte qu'il est détecté si le dispositif de commande (10) se trouve dans une première zone partielle (101) de la zone géographique localement limitée (100) ou dans une seconde zone partielle (102) de la zone géographique localement limitée (100), dans lequel les première et seconde zones partielles (101, 102) de la zone géographique localement limitée (100) sont disjointes,
dans lequel la première zone partielle (101) correspond à une première pièce ou un premier espace et la seconde zone partielle (102) correspond à une seconde pièce ou second espace, dans lequel le dispositif de commande (10) est utilisé ou peut être utilisé - en plus du au moins un actionneur (21) - pour commander également au moins un actionneur supplémentaire (22), dans lequel le au moins un actionneur (21) est affecté à la première zone partielle (101) de la zone géographique localement limitée (100) ou est agencé dans celle-ci, et dans lequel le au moins un actionneur supplémentaire (22) est associé à la seconde zone partielle (102) de la zone géographique localement limitée (100) ou est agencé dans celle-ci, dans lequel
- en fonction de l'information de localisation ou de la détection de si le dispositif de commande (10) est agencé dans la première zone partielle (101) de la zone géographique localement limitée (100) ou dans la seconde zone partielle (102) de la zone géographique localement limitée (100),
- le au moins un actionneur (21) ou le au moins un actionneur supplémentaire (22) est commandé en fonction de l'interaction de l'utilisateur détectée par rapport au dispositif de commande (10), ou un message de commande est généré et/ou transmis au au moins un actionneur (21) ou au au moins un actionneur supplémentaire (22).

2. Procédé selon la revendication 1, **caractérisé en ce que** la zone géographique localement limitée (100) correspond à un appartement ou un bâtiment ou une maison ou un terrain ou une pluralité de terrains, en particulier le terrain ou la pluralité de terrains comprenant une pluralité d'appartements ou de maisons ou de bâtiments, dans lequel la zone géographique localement limitée (100) est en particulier plus petite qu'un pays, une ville ou un quartier.

3. Procédé selon l'une des revendications précédentes, **caractérisé en ce qu'**un ou plusieurs des procédés suivants sont utilisés pour détecter l'interaction de l'utilisateur par rapport au dispositif de commande (10), dans lequel une information d'interaction est générée :
- en détectant un changement de position en rotation et/ou en translation du dispositif de commande (10),
en particulier au moyen d'un détecteur d'orientation ou de position faisant partie du dispositif de commande (10) - comprenant au moins un capteur inertiel - ou au moyen d'un détecteur d'orientation ou de position agencé à l'extérieur du dispositif de commande (10),
- en détectant un signal optique ou un signal d'image ou un signal vidéo par le dispositif de commande (10) ou par un capteur optique ou un capteur vidéo agencé à l'extérieur du dispositif de commande (10), en particulier au moyen d'un dispositif à caméra du dispositif de commande (10) ou d'un dispositif à caméra agencé à l'extérieur du dispositif de commande (10),
- en détectant un signal acoustique par le dispositif de commande (10) ou par un capteur acoustique à l'extérieur du dispositif de commande (10).

4. Procédé selon l'une des revendications précédentes, **caractérisé en ce que** pour localiser le dispositif de commande (10) à l'intérieur de la zone géographique localement limitée (100), le dispositif de commande (10) comprend le au moins un dispositif de capteur (31),
dans lequel le dispositif de capteur (31) est en particulier conçu sous la forme d'un détecteur de position ou de lieu qui comporte un capteur inertiel ou une pluralité de capteurs inertiels et/ou un capteur de pression et/ou un capteur de champ magnétique ou une boussole.

5. Procédé selon l'une des revendications précédentes, **caractérisé en ce que** pour localiser le dispositif de commande (10) à l'intérieur de la zone géographique localement limitée (100), le dispositif de commande (10) interagit avec le dispositif de capteur (31) ou avec une pluralité de dispositifs de capteur (30),
en particulier, en recevant et/ou en envoyant des signaux électromagnétiques et/ou en évaluant en particulier la force ou l'intensité de champ de signaux électromagnétiques reçus.

6. Procédé selon l'une des revendications précédentes, **caractérisé en ce que** la localisation du dispositif de commande (10) à l'intérieur de la zone géographique localement limitée (100) est effectuée au moyen d'un ou plusieurs des procédés suivants :
- au moyen d'une triangulation utilisant une technologie radio à courte portée entre la pluralité de dispositifs de capteur (30) d'une part et le dispositif de commande (10) d'autre part, dans lequel la technologie Bluetooth et/ou Zigbee et/ou une technologie de radiocommunication en champ proche et/ou une technologie radio de dispositif à dispositif est utilisée comme technologie radio à courte portée,
- en utilisant un système mondial de navigation par satellite et/ou en utilisant un système de renforcement satellitaire et/ou en utilisant un système mondial de localisation par satellite pris en charge par un système différentiel de positionnement par satellite, dans lequel le positionnement du dispositif de commande (10) est en particulier effectué par le dispositif de commande (10) lui-même ou par le dispositif de capteur (31) du dispositif de commande (10).

7. Procédé selon l'une des revendications précédentes, **caractérisé en ce que**
- la commande du au moins un actionneur (21) ou
- la commande du au moins un actionneur (21) ou du au moins un actionneur supplémentaire (22)
est effectuée par le dispositif de commande (40) et/ou
**en ce que** le dispositif de commande (40) génère ou transmet le message de commande pour commander
- le au moins un actionneur (21) ou
- le au moins un actionneur (21) ou le au moins un actionneur supplémentaire (22),
dans lequel la commande et/ou la génération et/ou la transmission du au moins un message de commande en fonction de la localisation du dispositif de commande (10) et en fonction de l'interaction d'utilisateur détectée est en particulier effectuée de telle sorte que la commande et/ou la génération et/ou la transmission du au moins un message de commande s'effectue en fonction du contexte, en particulier en plus en fonction d'événements de commande et/ou de routines de commande antérieurs.

8. Système pour commander au moins un actionneur (21) d'un système domotique intelligent et/ou pour générer et/ou transmettre au moins un message de commande au au moins un actionneur (21) du système domotique intelligent en utilisant un dispositif de commande (10),
dans lequel l'actionneur (21) fait partie d'une pluralité d'actionneurs (20) qui sont agencés ou présents dans une zone géographique localement limitée (100) du système domotique intelligent et qui sont directement ou indirectement connectés les uns aux autres dans la zone géographique localement limitée (100),
dans lequel un dispositif de commande (40) est agencé en tant que dispositif de serveur périphérique pour commander la pluralité d'actionneurs (20) dans la zone géographique localement limitée (100), ou un dispositif de commande (40) situé à l'extérieur de celui-ci est affecté à la zone géographique localement limitée (100) en tant que dispositif de serveur périphérique pour commander la pluralité d'actionneurs (20),
dans lequel au moins un dispositif de capteur (31) est présent dans la zone géographique localement limitée (100), au moyen duquel le dispositif de commande (10) peut être localisé à l'intérieur de la zone géographique localement limitée (100), dans lequel le système comprend le dispositif de commande (10), le dispositif de capteur (31) et le dispositif de commande (40),
dans lequel le système est configuré pour commander le au moins un actionneur (21) et/ou pour générer et/ou transmettre au moins un message de commande au au moins un actionneur (21), de telle sorte que
- une localisation du dispositif de commande (10) est effectuée à l'intérieur de la zone géographique localement limitée (100),
- une interaction de l'utilisateur par rapport au dispositif de commande (10) est détectée et
- le au moins un actionneur (21) est commandé en fonction de la localisation du dispositif de commande (10) à l'intérieur de la zone géographique localement limitée (100) et en fonction de l'interaction de l'utilisateur détectée par rapport au dispositif de commande (10), ou un message de commande est généré et/ou transmis au au moins un actionneur (21), dans lequel le système est configuré de telle sorte que
- une information de localisation est générée ou présente pour localiser le dispositif de commande (10) à l'intérieur de la zone géographique localement limitée (100) et/ou
la localisation du dispositif de commande (10) à l'intérieur de la zone géographique localement limitée (100) est au moins effectuée de telle sorte qu'il est détecté si le dispositif de commande (10) se trouve dans une première zone partielle (101) de la zone géographique localement limitée (100) ou dans une seconde zone partielle (102) de la zone géographique localement limitée (100), dans lequel les première et seconde zones partielles (101, 102) de la zone géographique localement limitée (100) sont disjointes, dans lequel la première zone partielle (101) correspond à une première pièce ou premier espace et dans lequel la seconde zone partielle (102) correspond à une seconde pièce ou second espace, dans lequel le système est configuré de telle sorte que le dispositif de commande (10) est utilisé ou peut être utilisé - en plus du au moins un actionneur (21) - pour commander également au moins un actionneur supplémentaire (22), dans lequel le au moins un actionneur (21) est associé à la première zone partielle (101) de la zone géographique localement limitée (100) ou est agencé dans celle-ci, et dans lequel le au moins un actionneur supplémentaire (22) est associé à la seconde zone partielle (102) de la zone géographique localement limitée (100) ou est agencé dans celle-ci,
dans lequel le système est configuré de telle sorte que
- en fonction de l'information de localisation ou de la détection de si le dispositif de commande (10) est agencé dans la première zone partielle (101) de la zone géographique localement limitée (100) ou dans la seconde zone partielle (102) de la zone géographique localement limitée (100),
- le au moins un actionneur (21) ou le au moins un actionneur supplémentaire (22) est commandé en fonction de l'interaction de l'utilisateur détectée par rapport au dispositif de commande (10), ou un message de commande est généré et/ou transmis au au moins un actionneur (21) ou au au moins un actionneur supplémentaire (22).

9. Dispositif de commande (40) renforcé pour une utilisation dans un procédé selon la revendication 7.

10. Programme informatique comprenant des instructions au moyen desquelles les étapes d'un procédé selon l'une des revendications 1 à 7 peuvent être réalisées lorsque le programme informatique est exécuté sur un dispositif programmable en tant que partie du système.

11. Support lisible par ordinateur destiné à stocker un programme informatique, dans lequel le support lisible par ordinateur mémorise le programme informatique selon la revendication 10.
